# FASCICULE DE BREVET EUROPEEN

(11) **EP 2 058 473 B1**
(45) Date de publication et mention de la délivrance du brevet: **09.03.2011**
(21) Numéro de dépôt: 08168742.8
(22) Date de dépôt: 10.11.2008
(51) Int. Cl.: F01D 5/14, F01D 5/22

(54) **Aube métallique fabriquée par moulage**
Durch Formguss hergestellte Metalllaufradschaufel
Metal vane made by moulding.

(30) Priorité: 12.11.2007 FR 0707924
(43) Date de publication de la demande: 13.05.2009
(73) Titulaire: SNECMA, 75015 Paris (FR)
(72) Inventeur: Baumas, Olivier, Jean, Daniel, 77240, Vert Saint Denis (FR); Lanciaux, Lucie, 75017, Paris (FR)
(74) Mandataire: Bloch & Bonnétat

(56) Documents cités:
- EP-A- 1 559 871
- FR-A- 2 890 878
- US-B1- 6 364 001
- US-B1- 6 491 498

## Description

L'invention concerne une aube métallique fabriquée par moulage, une turbine avec une telle aube et une turbomachine avec une telle turbine.

Une turbomachine, par exemple un turboréacteur, comprend généralement une soufflante, un ou plusieurs étages de compresseur, une chambre de combustion, un ou plusieurs étages de turbine et une tuyère. Les gaz sont entraînés par des rotors de la soufflante, du compresseur et de la turbine, grâce à des aubes radiales fixées à la périphérie des rotors.

Les notions de position ou disposition interne, externe, radiale, amont ou aval sont définies par rapport à l'axe principal de la turbomachine et au sens d'écoulement des gaz dans cette dernière.

Une aube mobile de turbine comporte un pied, par lequel elle est fixée au disque rotor, une plate-forme, formant un élément de la paroi interne délimitant la veine de gaz, et une pale, qui s'étend globalement suivant un axe radial et est balayée par les gaz. Selon le moteur et l'étage de turbine, la pale se termine, à son extrémité éloignée du pied, par un élément transversal à l'axe général (principal) de la pale, appelé talon, qui forme un élément de la paroi externe délimitant la veine de gaz.

La surface externe du talon supporte une ou plusieurs lames — ou léchettes — radiales, adaptées pour former, avec la paroi du stator en regard, un joint à labyrinthe, assurant l'étanchéité au gaz; à cet effet, ladite paroi du stator est généralement formée par un anneau en matériau abradable, sur lequel les lames viennent frotter. Les lames comprennent une face amont et une face aval qui s'étendent transversalement au flux de gaz.

Une aube de turbomachine avec de telles léchettes est présentée dans le document US 6,491,498.

L'aube peut être monobloc, le pied, la plate-forme, la pale et le talon étant formés d'une seule pièce. L'aube est formée par moulage, par un procédé dit "à la cire perdue", bien connu de l'homme du métier. Dans un tel procédé :
- un modèle de l'aube est préalablement formé en cire;
- ce modèle est trempé dans une barbotine de matériau céramique réfractaire qui, une fois cuite, forme une carapace;
- la cire est fondue et est évacuée, permettant d'obtenir un "moule carapace" formé dans le matériau céramique et dont le volume intérieur définit la forme de l'aube;
- du métal en fusion est introduit dans le moule carapace, une pluralité de moules carapace étant généralement assemblée en une grappe avec une alimentation commune en métal;
- le moule carapace est brisé, permettant d'obtenir l'aube métallique.

Les points d'alimentation en métal du moule carapace génèrent, sur l'aube métallique formée dans le moule, des tétons métalliques, d'épaisseur relativement importante, qu'il faut usiner une fois l'aube formée. L'alimentation se fait généralement au niveau du talon de l'aube. Le diamètre du canal d'alimentation, et par suite du téton formé, est important, alors même que cette alimentation se trouve à proximité des lames du joint labyrinthe, qui sont de faible épaisseur; il s'ensuit, si une seule alimentation est prévue, une mauvaise répartition du métal dans le moule carapace, conduisant à des problèmes de porosité de l'aube, en particulier au niveau de ses lames.

Ce problème peut être résolu en prévoyant deux entrées d'alimentation, le diamètre des canaux d'alimentation étant réduit en conséquence. Ainsi, au lieu d'une alimentation de fort diamètre, deux alimentations de plus faible diamètre, mais éloignées l'une de l'autre, sont prévues, ce qui permet une meilleure répartition du métal et évite les problèmes de porosité.

Néanmoins, il serait souhaitable de résoudre les problèmes de porosité tout en gardant une alimentation unique.

A cet effet, l'invention concerne une aube de turbomachine formée par moulage, comportant une pale à une extrémité de laquelle est ménagé un talon formé d'une seule pièce avec la pale, dont il est solidaire au niveau d'une zone de raccordement, le talon comportant une plate-forme sur laquelle est ménagée au moins une lame d'étanchéité, une première baignoire étant ménagée dans la plate-forme, caractérisée par le fait qu'une seconde baignoire est ménagée dans la première baignoire, au niveau de la zone de raccordement entre la pale et le talon.

La présence d'une seconde baignoire dans la première baignoire, au niveau de la zone de raccordement entre la pale et le talon, permet d'éviter une surépaisseur trop importante de cette zone, ce qui autorise, lors du moulage de l'aube, une meilleure répartition du métal liquide dans le moule. Cette meilleure répartition autorise la mise en oeuvre d'un procédé de moulage avec une alimentation unique en métal. La fabrication de l'aube avec alimentation unique présente l'avantage d'une plus grande simplicité du moule carapace et donc, le cas échéant, de la grappe de moules carapaces; le coût de fabrication des aubes est ainsi réduit, tandis que leur qualité est améliorée.

Par ailleurs, la quantité de matière au niveau du talon est optimisée, ce qui réduit la masse et le coût de l'aube.

De plus, les sollicitations mécaniques sur le talon et/ou sur la pale sont mieux optimisées et mieux absorbées par l'aube, puisque la masse est mieux répartie.

Selon une forme de réalisation, la première baignoire étant définie par des surfaces radiales et un fond, la seconde baignoire est ménagée dans le fond de la première baignoire.

Selon une forme de réalisation, la seconde baignoire est formée, dans l'axe principal de l'aube, au droit de la zone de raccordement entre le talon et la pale.

Selon une forme de réalisation, la pale étant formée par une paroi pleine et comportant, dans la zone de raccordement, des surfaces incurvées, et la seconde baignoire comportant des surfaces radiales incurvées et une surface de fond, les surfaces radiales incurvées de la seconde baignoire s'étendent sensiblement parallèlement aux surfaces incurvées de la pale dans la zone de raccordement, pour ménager une épaisseur sensiblement constante de l'aube dans la zone de raccordement.

L'invention porte également sur une turbine comportant au moins une aube selon l'invention.

L'invention porte également sur une turbomachine comportant au moins une turbine selon l'invention.

On décrit également un procédé de fabrication d'une aube de turbomachine, comportant les étapes consistant à :
- former un modèle de l'aube en cire, comportant une pale à une extrémité de laquelle est ménagé un talon formé d'une seule pièce avec la pale, dont il est solidaire au niveau d'une zone de raccordement, le talon comportant une plate-forme sur laquelle est ménagée au moins une lame d'étanchéité, une première baignoire étant ménagée dans la plate-forme et une seconde baignoire étant ménagée dans la première baignoire, au niveau de la zone de raccordement entre la pale et le talon,
- tremper l'aube en cire dans une barbotine de matériau réfractaire,
- former un moule carapace en matériau réfractaire,
- alimenter en métal en fusion le moule carapace, par une unique entrée d'alimentation,
- briser le moule carapace et obtenir l'aube.

Ce procédé ne fait pas partie de l'invention.

L'invention sera mieux comprise à la lecture de la description suivante de la forme de réalisation préférée de l'aube de l'invention, en référence aux dessins annexés, sur lesquels :
- la figure 1 représente une vue de profil schématique d'une aube de turbine conforme à l'invention,
- la figure 2 représente une vue en perspective du côté externe du talon de l'aube, vu du côté amont,
- la figure 3 représente une vue en coupe de la section de l'aube, dans le plan III-III indiqué sur la figure 1 et
- la figure 4 représente une vue en perspective du côté externe du talon de l'aube, vu de profil.

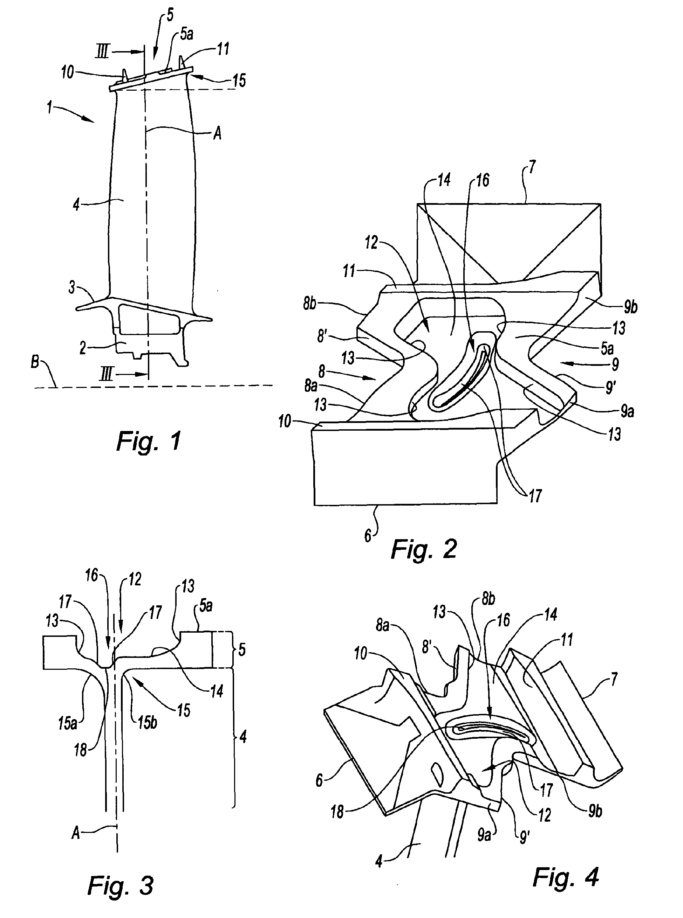

En référence à la figure 1, l'aube 1 de l'invention s'étend globalement suivant un axe principal A, qui est sensiblement radial par rapport à l'axe B de la turbomachine qui comporte l'aube 1. Il s'agit ici d'une aube de turbine de turboréacteur. L'aube 1 comporte un pied 2, qui s'étend du côté interne, une plate-forme 3, une pale 4 et un talon 5, qui s'étend du côté externe. Le talon 5 est raccordé à la pale 4 par une zone de raccordement 15. Le pied 2 est destiné à être reçu dans un logement du rotor pour sa fixation à ce dernier. La plate-forme 3 s'étend entre le pied 2 et la pale 4 et comporte une surface s'étendant transversalement par rapport à l'axe A de l'aube 1 pour former un élément de la paroi délimitant la veine de gaz de son côté interne; cette paroi interne est formée par l'ensemble des plates-formes 3 des aubes 1 de l'étage de turbine considéré, qui sont juxtaposées. La pale 4 s'étend globalement le long de l'axe principal A de l'aube 1 et présente une forme aérodynamique adaptée à son utilisation, de manière bien connue de l'homme du métier. Le talon 5 comporte une plate-forme 5a qui s'étend, à l'extrémité externe de la pale 4, sensiblement transversalement à l'axe principal A de l'aube 1.

En référence aux figures 2 et 4, la plate-forme du talon 5 comporte un bord amont 6 et un bord aval 7 orientés transversalement par rapport à la direction d'écoulement des gaz (l'écoulement se fait globalement parallèlement à l'axe B du turboréacteur). Ces deux bords transversaux amont 6 et aval 7 sont reliés par deux bords latéraux 8, 9, qui ont un profil dit en Z : chaque bord latéral 8, 9 comporte deux portions longitudinales (8a, 8b), (9a, 9b), respectivement, reliées entre elles par une portion 8', 9', respectivement, qui est sensiblement transversale ou du moins de biais par rapport à la direction d'écoulement des gaz. C'est le long des bords latéraux 8, 9 que le talon 5 vient en contact avec les talons des deux aubes adjacentes sur le rotor. Plus précisément, dans le but d'amortir les vibrations auxquelles elles sont soumises en fonctionnement, les aubes sont généralement montées sur le disque avec une contrainte de torsion autour de leur axe principal A. Les talons 5 sont conformés pour que les aubes soient ainsi mises en contrainte de torsion par appui avec leurs voisines le long des portions transversales 8', 9' des bords latéraux 8, 9.

A partir de la surface externe de la plate-forme 5a du talon 5, s'étendent des lames 10, 11 - ou léchettes 10, 11 - radiales, ici au nombre de deux; une seule lame ou plus de deux lames pourraient être prévues. Chaque lame 10, 11 s'étend transversalement à l'axe B de la turbomachine, à partir de la surface externe de la plate-forme du talon 5, entre deux portions longitudinales (8a, 9a), (8b, 9b) opposées des bords latéraux 8, 9 du talon 5.

La plate-forme 5a du talon 5 s'étend globalement avec un angle radial α par rapport à l'axe B de la turbomachine. En effet, dans la turbine, la section de la veine de gaz va en augmentant depuis l'amont vers l'aval, pour permettre la détente des gaz; la plate-forme 5a du talon 5 s'éloigne donc de l'axe B de la turbomachine, de l'amont vers l'aval, sa surface interne définissant la limite externe de la veine de gaz.

Une première baignoire 12 est formée (grâce à la forme du moule) dans la plate-forme 5a du talon 5. Cette première baignoire 12 est une cavité formée par des surfaces périphériques 13 formant épaulement, qui s'étendent à partir de la surface externe de la plate-forme 5a et rejoignent une surface 14 formant le fond 14 de la première baignoire 12. Les surfaces périphériques 13 s'étendent sensiblement radialement, ici de manière incurvée du côté interne, pour former raccord entre la surface externe de la plate-forme 5a et la surface de fond 14 de la première baignoire 12. Ces surfaces radiales incurvées 13 s'étendent globalement parallèlement aux bords latéraux 8, 9 et transversaux 6, 7 de la plate-forme 5a du talon 5, dont elles suivent la forme en vue de dessus (dans l'axe principal A de l'aube 1). Certaines zones du talon 5 peuvent être dépourvues de telles surfaces radiales 13, la surface de fond 14 de la première baignoire 12 débouchant directement sur le bord latéral (voir le bord 9a de la Figure 2) (on note que, sur la Figure 4, ces zones ne sont pas placées au même endroit).

Une telle première baignoire 12 était déjà prévue dans les aubes de l'art antérieur. Sa fonction est d'alléger le talon 5 tout en conservant ses propriétés mécaniques : l'épaisseur de la plate-forme 5a du talon 5 est importante à proximité des bords latéraux 8, 9 dont les surfaces latérales, en contact avec les aubes adjacentes, sont soumises à de fortes contraintes lors de la rotation de l'aube 1, tandis que la partie centrale de la plate-forme 5a du talon 5 - soumise à des contraintes moins importantes - est évidée, formant la première baignoire 12.

Le talon 5 comporte par ailleurs une baignoire 16 dans la première baignoire 12, que l'on dénommera seconde baignoire 16. La seconde baignoire 16 est formée au niveau de la zone 15 de raccordement entre le talon 5 et la pale 4. Plus précisément, la seconde baignoire est formée, dans l'axe principal A de l'aube 1, au droit de la zone 15 de raccordement entre le talon 5 et la pale 4.

La seconde baignoire 16 est une cavité formée par des surfaces périphériques 17 formant épaulement, qui relient la surface de fond 14 de la première baignoire 12 à une surface 18 formant le fond de la seconde baignoire 16 (et située du côté interne par rapport à la surface de fond 14 de la première baignoire 12). Les surfaces périphériques 17 s'étendent sensiblement radialement, ici de manière incurvée des côtés externe et interne, pour former raccord entre la surface de fond 14 de la première baignoire 12 et la surface de fond. 18 de la seconde baignoire 16. Ces surfaces radiales incurvées 17 s'étendent globalement parallèlement aux surfaces de la pale 4, dont elles suivent la forme en vue de dessus (dans l'axe principal A de l'aube 1) (voir Figure 4).

La seconde baignoire 16 est formée lors du moulage (autrement dit, la forme du moule carapace permettant de former l'aube 1 est adaptée pour former une telle seconde baignoire 16). L'aube 1 est formée par un procédé de moulage à la cire perdue, tel que celui exposé dans le préambule de la description.

La présence d'une seconde baignoire 16 permet d'éviter que la zone 15 de raccordement entre le talon 5 et la pale 4 ne présente une épaisseur trop importante. De ce fait, lors de l'introduction du métal dans le moule carapace, le métal est réparti de manière plus uniforme, ce qui évite l'apparition de porosités, même si le métal est introduit par une alimentation unique.

Ainsi, l'aube 1 peut être formée par un procédé de moulage à la cire perdue avec une unique entrée d'alimentation en métal liquide pour chaque moule carapace, plus simple et donc moins coûteux. Si les moules sont réunis en grappes, celles-ci sont d'autant plus simples. De plus, du fait de l'alimentation du moule carapace par une unique entrée d'alimentation, l'aube fabriquée ne comporte plus qu'un téton résiduel à usiner. L'usinage d'une telle pièce s'en trouve allégé.

Par ailleurs, la masse et donc le coût de l'aube 1 sont réduits du fait de la présence d'une seconde baignoire 16, tandis que les contraintes sur le talon 5 ainsi que les contraintes sur la pale 4 sont mieux réparties et donc mieux supportées par l'aube 1.

La pale 4 est ici formée par une paroi pleine, c'est-à-dire qu'elle n'est pas refroidie par une chemise ou un évidement ménagé dans l'épaisseur de sa paroi. Les surfaces périphériques 17 et la surface de fond 18 de la seconde baignoire 16 sont de préférence agencées pour que l'épaisseur de l'aube 1 soit sensiblement constante dans la zone 15 de raccordement entre le talon 5 et l'aube 4. Cette caractéristique est bien visible sur la figure 3. Plus précisément, si on note 15a, 15b les surfaces incurvées de la pale 4 au niveau de la zone 15 de raccordement entre la pale 4 et le talon 5, on voit sur la figure 3 que les surfaces radiales incurvées 17 de la seconde baignoire 16 sont conformées pour s'étendre sensiblement parallèlement aux surfaces incurvées 15a, 15b de la pale 4 avec lesquelles elles sont en regard. Dans la forme de réalisation présentée, le rayon des surfaces radiales incurvées 17 de la seconde baignoire 16 n'est pas identique au rayon des surfaces incurvées 15a, 15b de la pale 4 en vis-à-vis, mais ces surfaces sont néanmoins sensiblement parallèles.

On voit sur la partie de la seconde baignoire 16 située à gauche sur la figure 3 qu'il y a continuité de forme curviligne, sans portion réellement plane, entre la surface radiale incurvée 13 de la première baignoire 12, le fond 14 de la première baignoire 12 et la surface radiale incurvée 17 de la seconde baignoire 16. En revanche, sur la partie de la seconde baignoire 16 située à droite sur la figure 3, on distingue très nettement chacune de ces portions. L'agencement des différentes portions entre elles dépend bien entendu, dans une zone (en coupe) considérée, de la position des surfaces du talon 5 par rapport aux surfaces de la pale 4.

L'invention a été présentée en référence à une aube mobile de turbine. Elle s'applique en fait à toute aube formée par moulage, comprenant une pale à une extrémité de laquelle est ménagé un talon formé d'une seule pièce avec la pale.

## Revendications

1. Aube de turbomachine formée par moulage, comportant une pale (4) à une extrémité de laquelle est ménagé un talon (5) formé d'une seule pièce avec la pale (4), dont il est solidaire au niveau d'une zone de raccordement (15), le talon (5) comportant une plate-forme (5a) sur laquelle est ménagée au moins une lame d'étanchéité (10, 11), une première baignoire (12) étant ménagée dans la plate-forme (5a), **caractérisée par le fait qu'**une seconde baignoire (16) est ménagée dans la première baignoire (12), au niveau de la zone (15) de raccordement entre la pale (4) et le talon (5).

2. Aube selon la revendication 1 dans laquelle, la première baignoire (12) étant définie par des surfaces radiales (13) et un fond (14), la seconde baignoire (16) est ménagée dans le fond (14) de la première baignoire (12).

3. Aube selon l'une des revendications 1 ou 2, dans laquelle la seconde baignoire (16) est formée, dans l'axe principal (A) de l'aube, au droit de la zone (15) de raccordement entre le talon (5) et la pale (4).

4. Aube selon la revendication 3 dans laquelle, la pale (4) étant formée par une paroi pleine et comportant, dans la zone de raccordement (15), des surfaces incurvées (15a, 15b), et la seconde baignoire (16) comportant des surfaces radiales incurvées (17) et une surface de fond (18), les surfaces radiales incurvées (17) de la seconde baignoire (16) s'étendent sensiblement parallèlement aux surfaces incurvées (15a, 15b) de la pale (4) dans la zone de raccordement (15), pour ménager une épaisseur sensiblement constante de l'aube dans la zone de raccordement (15).

5. Turbine comportant au moins une aube selon l'une des revendications 1 à 4.

6. Turbomachine comportant au moins une turbine selon la revendication 5.

## Claims

1. An impeller blade for turbomachine formed by molding, comprising a blade (4) at one end of which is provided a heel (5) formed of a single piece with the blade (4), to which it is joined at the level of a connection area (15), the heel (5) comprising a platform (5a) on which is provided at least one sealing plate (10, 11), a first bath (12) being provided in the platform (5a), wherein a second bath (16) is provided in the first bath (12), at the level of the connection area (15) between the blade (4) and the heel (5).

2. The impeller blade as claimed in claim 1, wherein, the first bath (12) being defined by radial surfaces (13) and a bottom (14), the second bath (16) is provided in the bottom (14) of the first bath (12).

3. The impeller blade as claimed in claim 1 or 2, wherein the second bath (16) is formed, in the main axis (A) of the impeller blade, in line with the connection area (15) between the heel (5) and the blade (4).

4. The impeller blade as claimed in claim 3, wherein, the blade (4) being formed by a solid wall and comprising, in the connection area (15), incurved surfaces, (15a, 15b) and the second bath (16) comprising incurved radial surfaces (17) and a bottom surface (18), the incurved radial surfaces (17) of the second bath (16) extend roughly parallel to the incurved surfaces(15a, 15b) of the blade (4) in the connection area (15), to provide a substantially constant thickness of the impeller blade in the connection area (15).

5. A turbine comprising at least one impeller blade as claimed in any of claim 1 to 4.

6. A turbomachine comprising at least one turbine as claimed in claim 5.

## Patentansprüche

1. Turbomaschinenschaufel, durch Formen gebildet, umfassend ein Blatt (4), an dessen einem Ende ein Ansatz (5) eingerichtet ist, der aus einem Stück mit dem Blatt (4) gebildet ist, mit dem er an einer Verbindungszone (15) fest verbunden ist, wobei der Ansatz (5) eine Plattform (5a) umfasst, auf der mindestens ein Dichtungsstreifen (10, 11) eingerichtet ist, wobei eine erste Wanne (12) in der Plattform (5a) eingerichtet ist, **dadurch gekennzeichnet, dass** eine zweite Wanne (16) in der ersten Wanne (12) an der Verbindungszone (15) zwischen dem Blatt (4) und dem Ansatz (5) eingerichtet ist.

2. Schaufel nach Anspruch 1, wobei die erste Wanne (12) durch radiale Oberflächen (13) und einen Boden (14) definiert ist, wobei die zweite Wanne (16) in dem Boden (14) der ersten Wanne (12) eingerichtet ist.

3. Schaufel nach einem der Ansprüche 1 oder 2, wobei die zweite Wanne (16) in der Hauptachse (A) der Schaufel, fluchtrecht zu der Verbindungszone (15) zwischen dem Ansatz (5) und dem Blatt (4), gebildet ist.

4. Schaufel nach Anspruch 3, wobei das Blatt (4) durch eine massive Wand gebildet wird, und in der Verbindungszone (15) gekrümmte Oberflächen (15a, 15b) umfasst, und wobei die zweite Wanne (16) gekrümmte radiale Oberflächen (17) und eine Bodenfläche (18) umfasst, wobei die gekrümmten radialen Oberflächen (17) der zweiten Wanne (16) sich im Wesentlichen parallel zu den gekrümmten Oberflächen (15a, 15b) des Blatts (4) in der Verbindungszone (15) erstrecken, um eine im Wesentlichen konstante Dicke der Schaufel in der Verbindungszone (15) einzurichten.

5. Turbine, umfassend mindestens eine Schaufel nach einem der Ansprüche 1 bis 4.

6. Turbomaschine, umfassend mindestens eine Turbine nach Anspruch 5.
